# EUROPEAN PATENT SPECIFICATION

(11) **EP 0 621 414 B1**
(45) Date of publication and mention of the grant of the patent: **11.12.1996**
(21) Application number: 94201700.5
(22) Date of filing: 04.10.1990
(51) Int. Cl.: F16D 69/00, F16D 65/08

(54) **Noise abating brake shoe**
Geräuschmindernder Bremsschuh
Sabot de frein anti-bruit

(30) Priority: 10.10.1989 US 419487
(43) Date of publication of application: 26.10.1994
(62) Divisional of application: 90630169.2
(73) Proprietor: PNEUMO ABEX CORPORATION, Hampton, New Hampshire 03842 (US)
(72) Inventor: Hummel, Alan R., Winchester, Virginia 22602 (US); Swadley, David L., Winchester, Virginia 22602 (US)
(74) Representative: Schmitz, Jean-Marie

(56) References cited:
- DE-A- 3 734 289
- DE-B- 1 070 666
- GB-A- 654 669
- GB-A- 1 359 570
- US-A- 2 631 961
- US-A- 2 861 964
- US-A- 2 943 713

## Description

The present invention concerns a noise abating automotive drum brake shoe assembly according to the precharacterizing portion of claim 1.

For some time automotive manufacturers have been aware that the application of disc or drum brakes to slow or stop a vehicle may cause a significant amount of noise to emanate from the vehicle. It has been learned that such noise originates at the interface of a brake drum and a friction material brake block or at the interface of a rotor and the friction material of a disc brake pad during the braking application. During such application a resonance develops at the friction material brake drum or rotor interface which may be transmitted through the brake shoe assembly, the brake mounting hardware and into the suspension to cause objectionable noise to emanate from the vehicle.

Numerous attempts have been made to reduce the resonance vibration imparted during the braking operation. In vehicles equipped with disc brakes in which a disc brake pad engages a rotor, resonant vibrations have been reduced by providing a resilient coating at the interface between a disc brake pad backing plate and a caliper piston. Unfortunately, a conventional drum brake mechanism does not lend itself to such a solution. In an attempt to reduce the aforementioned resonant vibrations it has been the practice to stiffen certain brake and suspension system components to reduce their susceptibility to developing sympathetic resonant vibrations. Attempts to stiffen such systems have included casting ribs on the exterior surface of a brake drum to stiffen the drum, casting brake drums with a heavy ring of metal around the edge of the open end of the drum to stiffen the drum and welding supports on the suspension system to more firmly anchor suspension components to reduce their ability to transmit and/or amplify vibrations. Additionally, heavy rubber bands sometimes are secured to the exterior surface of brake drums in an attempt to reduce the vibrations transmitted therethrough. Unfortunately, none of the aforementioned mentions provide a definitive solution to the problem applicable to all vehicles.

Large vehicles such as trucks and busses are particularly susceptible to the generation of excessive noise during the braking process and the aforementioned attempts to reduce the resonance emanating from the brake drum friction material interface have been least successful in these applications.

The US-A-2 861 964 discloses a molded composition brake block comprising hard ferrous metal, cellulosic reinforcing fiber, non-ferrous inorganic and organic filler and an organic binder.

The DE-A-1 070 666 describes a brake block comprising organic friction material and material vulcanized or synthetic rubber and fillers.

The GB-A-1 359 570 describes a brake shoe having a pressed-on lining wherein a damping layer is arranged between the brake lining and the brake shoe in a recess in the outer surface of the brake shoe.

Accordingly, it is desirable to provide an automotive brake shoe assembly which is capable of interrupting and reducing the noise carrying vibrations originating at the friction material/brake drum interface during the braking application. It has been found desirable to interrupt these noise transmitting vibrations as close to this interface as possible.

The noise abating automotive drum brake shoe assembly of the present invention is defined in the characterizing portion of claim 1.

In order that the invention may be fully understood reference is made on the accompanying drawings, wherein
Fig. 1 illustrates an arrangement, not belonging to the invention, describing a noise abating friction material block mounted on the shoe table of a metal brake shoe;
Fig. 2 illustrates a noise abating automotive brake shoe assemblv according to the present invention in which an elastomeric sound damping material lies in longitudinally extending grooves and resiliently supports a brake block on the shoe table of a metal brake shoe;
Fig. 3 shows a noise abating automotive brake shoe assembly according to the present invention in which a plurality of laterally extending elastomeric sound damping segments are received in grooves formed in a friction material brake block and mounted between the brake block and the shoe table of a metal brake shoe.

It has been learned that objectionable noise causing vibrations originate at the interface of the outer diametral surface of a friction material brake block and the mating surface of a brake drum during the braking process. A resonance occurs as the vibrations are transmitted through the metal brake shoe assembly to brake mounting hardware and thereafter to suspension components of the vehicle. It has been found that the objectionable noise causing vibrations most effectively can be reduced by damping the resonant vibrations as close to the origin as possible. As a result of this discovery, a noise abating friction material block has been developed pursuant to the subject invention.

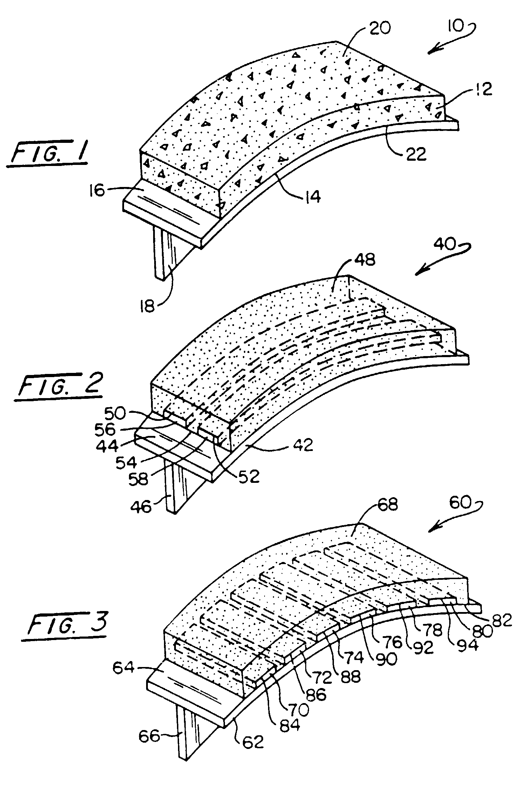

Turning to Fig. 1, describing an arrangement, not in accordance with the present invention a brake shoe assembly (10) incorporates a noise abating friction material brake block (12) and a metal brake shoe (14). The brake shoe includes an arcuate flat shoe table (16) adapted to mount the brake block (12) and a perpendicular shoe web (18) which extends from the shoe table and acts to reinforce the shoe table and to provide abutments for a brake actuating mecnanism not shown. The brake block (12) has an outer diameter surface (20) adapted to engage a complimentary surface on a brake drum not shown and an inside diameter surface (22) which mounts on the shoe table (16). The brake block (12) may be attached to the brake shoe (14) by an adhesive at the interface of the brake shoe and the brake block which may be cured by a combination of increased temperature and pressure or it may be attached by rivets or by bolts not shown.

In the embodiment depicted in Fig. 1, the brake block (12) functions to prevent the transmission and resonance of noise causing vibrations originating at the interface of the outer diameter surface (20) of the brake block (12) and a brake drum not shown. The brake block (12) incorporates a mixture of a particulate elastomeric sound damping material and conventional automotive friction material ingredients. The preferred formulation for the elastomeric sound damping material particles comprises about 2 to 15 percent by weight cured cashew nut shell resin, 5 to 25 percent by weight of nitrile rubber particles, 8 to 30 percent resin binder system, 4 to 20 percent fibers, 5 to 18 percent carbon materials and 20 to 40 percent fillers. It has been found that the resin binder system may be phenolic or cashew. Additionally, the fibers may be glass, rock wool, processed mineral fibers or a refractory material fiber. The carbon materials may be graphite, coke, coal particles, carbon black or any combination or descendent thereof. With respect to fillers, calcium carbonate and barium sulphate have been found to be economical and acceptable.

In the manufacture of the elastomeric sound damping material for the brake shoe of the Fig. 1, the elements described above are mixed using conventional commercial mixing techniques and equipments. Thereafter the mix is extruded utilizing conventional equipment into a desired shape. Thereafter, the extruded mix shapes are cured by being subjected to a pre-cure cycle of soaking for ten hours in air at 121°C (250F) followed by soaking in air for three hours at 204°C (400 F). Thereafter, the extruded mix shapes are converted into particles ranging in size from six to two hundred mesh using equipment such as a hammermill.

The elastomeric sound damping particles are added to the elements comprising a desired automotive friction material mix.

Examples of conventional automotive friction materials would be as follows:

| Class of Material | Examples | % by weight |
|---|---|---|
| Fibers | asbestos, glass, ceramic, metal | 5-65 |
| Binders | phenolic | 5-25 |
| Organic friction modifiers | rubber, cashew particles | 0-20 |
| Inorganic friction modifiers | ceramic, silica, rottenstone, alumina | 0-15 |
| Wear control agents | carbon, graphite | 3-15 |
| Inorganic fillers | barytes, calcium carbonate | 5-60 |
| Metal particles | zinc, brass, aluminum copper, steel | 0-15 |

The sound damping material addition preferably ranges from 2 to 30 percent by weight. The elastomeric sound damping material particles are mixed, with those of the friction material in such a way as to make the brake block a homogeneous element as near as possible. After the elastomeric sound damping material particles are added to the components comprising the friction material ingredients, the components are mixed, pre-cured and cured in the same manner as any conventional automotive friction material. Additionally, the brake block may be ground to any desired shape to create a desired brake block. Thereafter the brake block would be mounted on a metal brake shoe to provide a brake shoe assembly.

Although the exact operation of the elastomeric sound damping material particles within the automotive friction material to reduce the noise occurring during braking of a vehicle are not fully understood, it has been suggested that the elastomeric particles inhibit development of a noise causing vibrational frequency within the friction material brake block itself. Additionally, it has been suggested that the elastomeric sound damping material particles also function to add a degree of resilience to the friction material block at the interface of the inside diameter surface and the table of the metal brake shoe when the elements are assembled.

When the sound damping material particles are added to conventional automotive friction material ingredients in the preferred range of 2 to 30 percent by weight it has been found that good wear characteristics of the brake block are maintained and appropriate governmental approval of the brake block may be obtained.

Although the noise abating friction material block (12) described in connection with Fig. 1 has been found to provide a brake shoe assembly having suitable wear and performance characteristics, there are some applications where it would be preferable to utilize a brake shoe assembly having a brake block manufactured from conventional automotive friction material ingredients without the addition of elastomeric sound damping material particles. In these applications, it has been found that the addition of a separate elastomeric sound damping material element formed from the same ingredients as the particles introduced into the noise abating friction material brake block described in connection with Fig. 1 may be interposed between the table of a metal brake shoe and a conventional friction material brake block to provide an effective noise abating brake shoe assembly.

Figures 2 and 3 depict embodiments of the invention in which segments of thin layers of the elastomeric sound damping material are interposed between a metal brake shoe and a conventional brake block to provide a brake shoe assembly which reduces noise causing resonance between the brake block and the brake shoe.

In Fig. 2, the brake shoe assembly (40) includes a metal brake shoe (42) having a shoe table (44) and a reinforcing shoe web (46). A brake block (48) manufactured from a conventional automotive friction material comprises a second major component of the brake shoe assembly (40). However, a pair of grooves (50 and 52) are formed in the inside diameter surface (54) of the brake block (48). A pair of elastomeric sound damping segments (56 and 58) are received within the grooves (50 and 52) respectively. The thickness of the elastomeric sound damping segments equals the depth of the grooves (50 and 52). These segments interrupt the transmission of resonant frequencies from the brake block (48) to the metal brake shoe (42).

In the embodiment depicted in Fig. 2, the brake block, the resilient sound damping segments (54 and 58) and the shoe table (44) are bonded together using an adhesive. Of course, rivets and bolts also could be used to attach the brake block (48) to the brake shoe (42). Where bolts or rivets are used to assemble the elements, it is preferred that the bolts and rivets engage only the shoe table and the brake block (48) and not pass through the elastomeric sound damping segments (56 and 58). Although two segments are depicted in the embodiment set forth in Fig. 2, it has been found that a single wide longitudinally extending segment also would function in an acceptable manner. Additionally, more than two longitudinally extending segments may be inserted between the brake shoe and the brake block to provide a brake shoe assembly having acceptable noise abating characteristics.

In Fig. 2, the elastomeric sound damping segments (54 and 58) were depicted as extending in a direction longitudinally of the inside diameter surface of the brake block (48). However, it has been found that the elastomeric sound damping segment also may extend laterally of the inside diameter surface of a brake block.

Turning to Fig. 3, the brake shoe assembly (60) of the present invention may be seen to include a metal brake shoe (62) having a flat longitudinally extending shoe table (64) and a perpendicular reinforcing web (66). Additionally, it includes a brake block (68) manufactured from conventional automotive friction material ingredients. However, in this embodiment a plurality of laterally extending grooves (70 through 80) have been formed in the inside diameter surface (82) of the brake block (68). A plurality of elastomeric sound damping segments (84 through 94) are received within the grooves (70 through 80) respectively. Again, the segments (84 through 94) have a thickness approximately equal to the depth of the grooves (70 through 80). Additionally, in the embodiment depicted in Fig. 3, an adhesive has been utilized to assemble the brake shoe assembly (60) components in the same manner as described in connection with the embodiments depicted in Fig. 2. Of course, bolts or rivets also could be utilized to affix the brake block (68) to the metal brake shoe (62).

Since certain changes may be made to the above described apparatus, system and method without departing from the scope of the invention as claimed it is intended that all matter contained in the description thereof or shown in the accompanying drawings shall be interpreted as illustrative and not in a limiting sense.

## Claims

1. A noise abating automotive drum brake shoe assembly (40;60) comprising a metal brake shoe (42;62) having a flat, uninterrupted, shoe table (44;64) for supporting a friction material brake block (48;68); a friction material brake block (48;68) having a pair of first side surfaces, a pair of second side surfaces and an inside diameter surface (54;82) adapted to engage said shoe table (44;64) characterized by at least one groove (50,52;70,72,74,76,78,80) formed in the inside diameter surface (54;82) of the friction material brake block (48;68) and extending from one side surface to the opposite side surface adapted to receive an elastomeric sound damping material insert (56,58;84,86,88,90,92,94) ; an elastomeric sound damping material insert (56,58;84,86,88,90,92,94) with a back surface, a front surface and two elatomeric side surfaces and having a thickness approximately equal to the depth of said groove (50,52;70,72,74,76,78,80) inserted within said groove (50,52;70,72,74,76,78,80) such that the back and two elastomeric side surfaces of said sound damping material engage said friction material and wherein said sound damping material insert (56,58;84,86,88,90,92,94) is clamped between said inside diameter surface groove (50,52;70,72,74,76,78,80) and said shoe table (44;64) such that the front surface of said material engages said shoe table (44;64) to thereby reduce noise causing resonance between said brake block (48;68) and said brake shoe (42;64) .

2. The noise abating automotive drum brake shoe assembly (40;60) of claim 1 characterized in that said elastomeric sound damping material insert (56,58;84,86,88,90,92,94) consists of two to fifteen percent by weight of cured cashew nut shell resin, from five to twenty-five percent by weight of nitrile rubber, from eight to thirty percent by weight of a resin binder, from four to twenty percent by weight of a fiber selected from a group consisting of metal, glass, mineral rock wool and refractory and from about five to about eighteen percent of a substantially carbon material.

## Patentansprüche

1. Geräuschmindernde Bremsschuheinrichtung (40; 60) für eine Automobiltrommelbremse, die einen metallischen Bremsschuh (42; 62) umfasst, der einen flachen, nicht unterbrochenen Schuhtisch (44; 64) hat, um einen Bremsklotz (48; 68) aus Reibwerkstoff zu tragen; einen Bremsklotz (48; 68) aus Reibwerkstoff, der ein Paar von ersten Seitenflächen hat, ein Paar von zweiten Seitenflächen und eine Oberfläche (54; 82) am Innendurchmesser, die angepasst ist, um den Schuhtisch (44; 64) zu berühren, gekennzeichnet durch mindestens eine Rille (50, 52; 70, 72, 74, 76, 80), die auf der Oberfläche (54; 82) am Innendurchmesser des Bremsklotzes (48; 68) aus Reibwerkstoff ausgebildet ist und sich von einer Seitenfläche zur gegenüber liegenden Seitenfläche erstreckt und angepasst ist, um einen Einschub (56, 58; 84, 86, 88, 90, 92, 94) aus geräuschdämpfendem Elastomermaterial aufzunehmen; einen Einschub (56, 58; 84, 86, 88, 90, 92, 94) aus geräuschdämpfendem Elastomermaterial mit einer Rückseite, einer Vorderseite und zwei Seitenflächen aus Elastomer, der eine Dicke hat, die ungefähr gleich der Tiefe der Rille (50, 52; 70, 72, 74, 76, 80) ist und der so in die Rille (50, 52; 70, 72, 74, 76, 80) eingeschoben ist, dass die Rückseite und die zwei Seitenflächen aus Elastomer des geräuschdämpfenden Materials den Reibwerkstoff berühren, wobei der Einschub (56, 58; 84, 86, 88, 90, 92, 94) aus geräuschdämpfendem Material zwischen der Rille (50, 52; 70, 72, 74, 76, 80) auf der Oberfläche (54; 82) am Innendurchmesser und dem Schuhtisch (44; 64) so festgeklemmt wird, dass die Vorderseite des Materials den Schuhtisch (44; 64) berührt, um dadurch die Lärm verursachenden Resonanzen zwischen dem Bremsklotz (48; 68) und dem Bremsschuh (42; 64) zu verringern.

2. Geräuschmindernde Bremsschuheinrichtung (40; 60) für eine Automobiltrommelbremse nach Anspruch 1, dadurch gekennzeichnet, dass der Einschub (56, 58; 84, 86, 88, 90, 92, 94) aus geräuschdämpfendem Material aus zwei bis fünfzehn Gewichtsprozenten von getrocknetem Harz aus der Schale von Cashewnüssen, fünf bis fünfundzwanzig Gewichtsprozenten Nitrilkautschuk, acht bis dreissig Gewichtsprozenten eines Harzbinders, vier bis zwanzig Gewichtsprozenten einer Faser, die aus der Gruppe bestehend aus Metall, Glas, mineralische Steinwolle und feuerfestem Material ausgewählt wird, und aus fünf bis ungefähr achtzehn Gewichtsprozenten eines Materials aus im wesentlichen Kohlenstoff besteht.

## Revendications

1. Un assemblage (40;60) de sabot de frein à tambour anti-bruit pour automobile comprenant un sabot de frein métallique (42;62) ayant un plateau (44;64) de sabot ininterrompu plein pour soutenir un bloc (48;68) de frein en matière de friction; un bloc (48;68) de frein en matière de friction ayant une paire de premières surfaces latérales; une paire de secondes surfaces latérales et une surface diamétrique interne (54;82) adapté pour venir contre ce plateau (44;64) du sabot caractérisé par au moins une rainure (50,52;70,72,74,76,78,80) formée dans la surface diamétrique interne (54;82) du bloc de frein en matière de friction (48;68) et s'étendant depuis une surface latérale vers la surface latérale opposée adaptée pour recevoir une pièce insérée (56,58;84,86,88,90,92,94) en matière anti-bruit élastomère; une pièce insérée en matière anti-bruit élastomère (56,58;84,96,88,90,92,94) avec une surface arrière, une surface frontale et des surfaces latérales élastomères et ayant une épaisseur approximativement égale à la profondeur de cette rainure (50,52;70,72,74,76,78,80) insérée dans cette rainure (50,52;70,72,74,76,78,80) de telle façon que les surfaces arrières et les deux surfaces latérales élastomères de cette matière anti-bruit viennent contre cette matière de friction et dans lequel cette pièce insérée en matière anti-bruit (56,58;84,86,88,90,92,94) est serrée entre cette surface diamétrique interne de la rainure (50,52;70,72,74,76,78,80) et ce plateau ae sabot (44;64) de sorte que la surface frontale de cette matière vient contre ce plateau de sabot (44;64) pour réduire ainsi la résonance provoquant le bruit entre ce bloc de frein (48;68) et ce sabot de frein (42;64).

2. L'assemblage de sabot de frein à tambour anti-bruit pour automobile (40;60) de la revendication 1 caractérisé en ce que cette pièce insérée en matière anti-bruit élastomère (56,58;84,86,88,90,92,94) consiste en deux à quinze pourcents en poids de résine de coquille de noix d'acajou, de cinq à vingt-cinq pourcents en poids de caoutchouc nitrile, de huit à trente pourcents en poids de liant de résine, de quatre à vingt pourcents en poids de fibres choisies parmi un groupe comprenant du métal, du verre, de la laine de roche, et réfractaire et d'environ cinq à environ dix-huit pourcents d'une matière sensiblement carbonée.
